(19) **Europäisches Patentamt**
**European Patent Office**
**Office européen des brevets**

(11) **EP 4 156 087 A1**

(12) **EUROPEAN PATENT APPLICATION**
published in accordance with Art. 153(4) EPC

(43) Date of publication:
**29.03.2023 Bulletin 2023/13**

(51) International Patent Classification (IPC):
*G06T 7/00* (2006.01)

(21) Application number: **20936860.4**

(52) Cooperative Patent Classification (CPC):
**G06V 40/117; G06T 7/00**

(22) Date of filing: **21.05.2020**

(86) International application number:
**PCT/JP2020/020182**

(87) International publication number:
**WO 2021/234926 (25.11.2021 Gazette 2021/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventor: **AOKI, Takahiro**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **AUTHENTICATION METHOD, AUTHENTICATION PROGRAM, AND AUTHENTICATION DEVICE**

(57) An authentication method executed by a computer, the authentication method including: extracting, when a captured image of a living body is acquired, a biometric image included in a region that corresponds to the living body from the captured image; and performing authentication of the living body on the basis of the extracted biometric image and a position of the biometric image in the captured image.

FIG. 9

**Description**

FIELD

The present invention relates to an authentication method, an authentication program, and an authentication apparatus.

BACKGROUND

In a biometric authentication technology, the following technology has been proposed from an aspect of reducing an influence of distortion of a lens used for capturing an image of a living body (for example, see Patent Document 1). For example, a value of a brightness distribution of an image is multiplied by a weighting coefficient whose value increases as it approaches the center of the image, and a biometric image including a position of a maximum value of the brightness distribution is extracted as an image for authentication of a living body closest to the center of the image.

SUMMARY

TECHNICAL PROBLEM

However, the technology described above has an aspect in which authentication accuracy deteriorates because a biometric image with large lens distortion is still used for authentication in a case where a living body is positioned around a corner of the image away from the center of the image.

Furthermore, "lens distortion correction" that reduces an influence of lens distortion may be used. However, a correction error remains even in a case where the lens distortion correction is applied. The magnitude of the correction error is determined according to a position in a captured image, and conventional authentication processing does not take the correction error into consideration, so there has been a problem of deterioration of authentication accuracy.

In one aspect, it is an object of the present invention to provide an authentication method, an authentication program, and an authentication apparatus capable of improving authentication accuracy.

SOLUTION TO PROBLEM

In an aspect of an authentication method, there is provided an authentication method executed by a computer, the authentication method including: extracting, when a captured image of a living body is acquired, a biometric image included in a region that corresponds to the living body from the captured image; and performing authentication of the living body on the basis of the extracted biometric image and a position of the biometric image in the captured image.

ADVANTAGEOUS EFFECTS OF INVENTION

Authentication accuracy may be improved.

BRIEF DESCRIPTION OF DRAWINGS

FIG. 1 is a block diagram illustrating an example of a functional configuration of an authentication apparatus according to a first embodiment.
FIG. 2A is a diagram illustrating an example of having no distortion in radial distortion.
FIG. 2B is a diagram illustrating an example of having distortion in the radial distortion.
FIG. 3A is a diagram illustrating an example of having no distortion in circumferential distortion.
FIG. 3B is a diagram illustrating an example of having distortion in the circumferential distortion.
FIG. 4 is a diagram illustrating an example of a lens distortion correction error.
FIG. 5 is a diagram illustrating an outline of normalization processing in biometric authentication.
FIG. 6 is a diagram illustrating an outline of authentication processing.
FIG. 7 is a diagram illustrating an outline of calculation of a lens distortion correction error parameter.
FIG. 8 is a diagram illustrating an example of a template.
FIG. 9 is a flowchart illustrating a procedure of biometric authentication processing according to the first embodiment.
FIG. 10 is a flowchart illustrating a detailed procedure of extraction processing of FIG. 9.
FIG. 11 is a diagram illustrating an outline of the authentication processing.

FIG. 12 is a block diagram illustrating an example of a functional configuration of an authentication system according to a second embodiment.

FIG. 13 is a diagram illustrating an example of a template.

FIG. 14 is a diagram illustrating an example of a lens distortion correction error parameter table.

FIG. 15 is a diagram illustrating a hardware configuration example of a computer that executes an authentication program according to the first and second embodiments.

DESCRIPTION OF EMBODIMENTS

Hereinafter, an authentication method, an authentication program, and an authentication apparatus according to the present application will be described with reference to the accompanying drawings. Note that embodiments thereof do not limit the disclosed technology. Additionally, each of the embodiments may be appropriately combined within a range without causing contradiction between processing contents.

[First Embodiment]

[System Configuration]

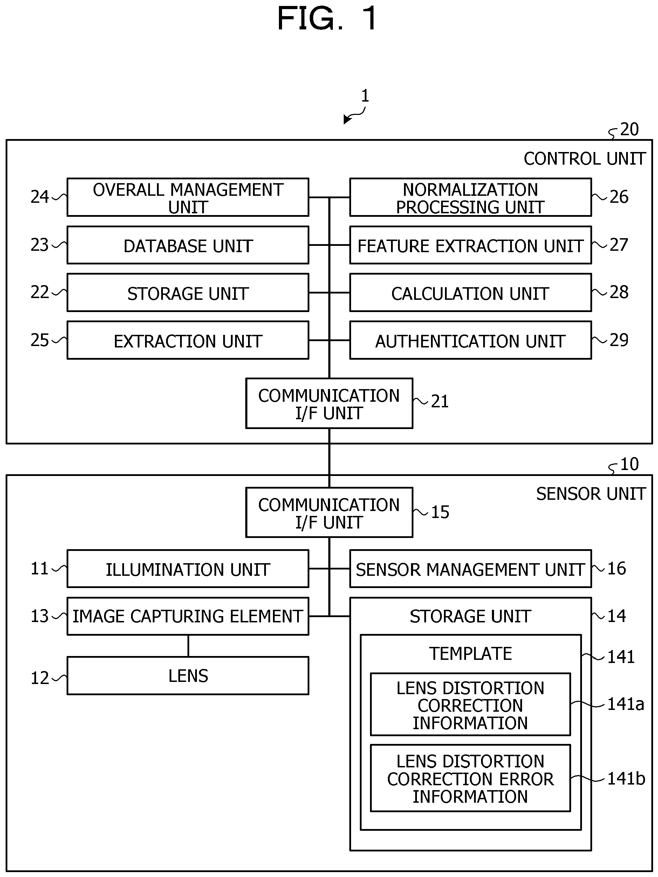

FIG. 1 is a block diagram illustrating an example of a functional configuration of an authentication apparatus according to a first embodiment. An authentication apparatus 1 illustrated in FIG. 1 performs biometric authentication by using a captured image obtained by capturing an image of a living body. In the following, vein authentication using veins of a palm will be described as an example of the biometric authentication. However, the present invention is not limited to this, and for example, authentication of biometric information using physical features may also be applied. Here, the physical features are a fist shape of a hand, blood vessels, a fingerprint of a finger, an iris and a retina of an eye, and the like.

As illustrated in FIG. 1, the authentication apparatus 1 includes a sensor unit 10 and a control unit 20. Note that the sensor unit 10 and the control unit 20 may be connected via a network. The network may be an optional type of communication network such as the Internet or a local area network (LAN) regardless of whether the network is wired or wireless.

[Configuration of Sensor Unit]

First, a configuration of the sensor unit 10 will be described. The sensor unit 10 generates a captured image of a living body by irradiating the living body with light and capturing an image of the light reflected by the living body. The sensor unit 10 includes an illumination unit 11, a lens 12, an image capturing element 13, a storage unit 14, a communication I/F unit 15, and a sensor management unit 16.

The illumination unit 11 irradiates a living body with light under the control of the sensor management unit 16. The illumination unit 11 is implemented by using a light emitting diode (LED) lamp, a xenon lamp, or the like.

The lens 12 forms an object image of a living body on a light reception surface of the image capturing element 13 by condensing light reflected by the living body. The lens 12 is implemented by using one or a plurality of single lenses. The lens 12 causes lens-derived distortion (distortion aberration) in a captured image depending on a configuration and combination of the single lenses (hereinafter referred to as "lens distortion"). The lens distortion has complex nonlinear characteristics. As for the lens distortion, the magnitude of the distortion, a range of influence, and the like are determined by design of the lens 12, for example, the number of components of the single lens or a material of the single lens. The lens distortion is affected by an error (manufacturing error or assembly error) when the lens 12 is assembled, and is different for each individual. Note that the lens 12 may be provided with a shutter, an aperture, or the like, or may be provided with at least one of a zoom mechanism and a focus mechanism capable of changing an angle of view and focus by moving the lens 12 along an optical axis.

The image capturing element 13 receives an object image formed on the light reception surface by the lens 12 and performs photoelectric conversion under the control of the sensor management unit 16 to generate a captured image (image data) obtained by capturing an image of a living body. The image capturing element 13 is implemented by using an image sensor such as a CCD or a CMOS, and an image processing chip including an A/D conversion circuit and an AFE circuit.

The storage unit 14 stores data for use in an operating system (OS) executed by the sensor management unit 16, and in an image capturing program and an authentication program executed by the sensor management unit 16. The storage unit 14 is implemented by using various semiconductor memory elements, and may employ, for example, a random access memory (RAM) or a flash memory. Furthermore, a template 141 for correcting lens distortion of the lens 12 is stored (saved) in the storage unit 14. The template 141 includes lens distortion correction information 141a for correcting lens distortion of the lens 12. Moreover, the template 141 includes lens distortion correction error information 141b for correcting an error (hereinafter referred to as a "lens distortion correction error") remaining after execution of lens distortion correction using the lens distortion correction information 141a (lens distortion correction parameter). Details of the lens distortion correction information 141a and the lens distortion correction error information 141b will be described later.

The communication I/F unit 15 corresponds to an example of an interface that controls communication with the control unit 20. As one embodiment, the communication I/F unit 15 may employ a network interface card or the like, such as a LAN card. For example, the communication I/F unit 15 receives an image capturing instruction signal from the control unit 20, and outputs a captured image generated by the image capturing element 13, the lens distortion correction information 141a, and the lens distortion correction error information 141b.

The sensor management unit 16 controls each unit of the sensor unit 10. As one embodiment, the sensor management unit 16 may be implemented by a hardware processor such as a central processing unit (CPU) or a micro processing unit (MPU). Here, a CPU or an MPU is exemplified as an example of the processor, but regardless of a general-purpose type or a specialized type, the sensor management unit 16 may be implemented by an optional processor, for example, a graphics processing unit (GPU) or a digital signal processor (DSP), or a deep learning unit (DLU) or a general-purpose computing on graphics processing units (GPGPU). Additionally, the sensor management unit 16 may also be implemented by a hard wired logic such as an application specific integrated circuit (ASIC) or a field programmable gate array (FPGA).

[Configuration of Control Unit]

Next, the control unit 20 will be described. The control unit 20 extracts a biometric image included in a region corresponding to a living body from a captured image acquired from the sensor unit 10, and performs authentication of the living body on the basis of the extracted biometric image and a position of the biometric image in the captured image. The control unit 20 includes a communication I/F unit 21, a storage unit 22, a database unit 23, an overall management unit 24, an extraction unit 25, a normalization processing unit 26, a feature extraction unit 27, a calculation unit 28, and an authentication unit 29 (collation unit).

The communication I/F unit 21 corresponds to an example of an interface that controls communication with the sensor unit 10. As one embodiment, the communication I/F unit 21 may employ a network interface card or the like, such as a LAN card. For example, the communication I/F unit 21 receives, from the sensor unit 10, a captured image generated by the image capturing element 13, the lens distortion correction information 141a, and the lens distortion correction error information 141b, under the control of the overall management unit 24. Furthermore, the communication I/F unit 21 outputs an image capturing instruction signal for instructing image capturing to the sensor unit 10 under the control of the overall management unit 24.

The overall management unit 24 performs overall control of the authentication apparatus 1. As one embodiment, the overall management unit 24 may be implemented by a hardware processor such as a central processing unit (CPU) or a micro processing unit (MPU). Here, a CPU or an MPU is exemplified as an example of the processor, but regardless of a general-purpose type or a specialized type, the overall management unit 24 may be implemented by an optional processor, for example, a graphics processing unit (GPU) or a digital signal processor (DSP), or a deep learning unit (DLU) or a general-purpose computing on graphics processing units (GPGPU). Additionally, the overall management unit 24 may also be implemented by a hard wired logic such as an application specific integrated circuit (ASIC) or a field programmable gate array (FPGA).

The database unit 23 stores ID information or the like for the authentication unit 29 to identify a biometric image, a registration template in which a previously registered biometric image of a user is registered, and the sensor unit 10. As one embodiment, the database unit 23 may be implemented as an auxiliary storage device in the authentication apparatus 1. For example, the database unit 23 may employ a hard disk drive (HDD), a solid state drive (SSD), or the like.

The storage unit 22 stores data for use in an operating system (OS) executed by the authentication apparatus 1, and in various programs such as an authentication program such as an application program or a middleware, for example. As one embodiment, the storage unit 22 may be implemented as a main storage device in the authentication apparatus 1. For example, the storage unit 22 is implemented by using various semiconductor memory elements, and may employ a RAM or a flash memory, for example.

The extraction unit 25 extracts a biometric image from a captured image captured by the sensor unit 10, and performs lens distortion correction processing of correcting lens distortion, which will be described later, on the extracted biometric image.

The normalization processing unit 26 performs normalization processing on a biometric image. Specifically, the normalization processing unit 26 performs normalization processing of correcting attitude variation on a biometric image. In the normalization processing, variation due to rotation, positional deviation, and the like of an input living body included in the biometric image is corrected.

The feature extraction unit 27 executes feature extraction processing of extracting a feature amount on a biometric image subjected to the normalization processing. Note that details of the feature extraction processing will be described later.

The calculation unit 28 calculates coordinates of a corrected image after lens distortion correction corresponding to predetermined coordinates of a biometric image on the basis of optical center coordinates of the lens 12 and a normalization parameter when the normalization processing unit 26 performs the normalization processing on the biometric image. Moreover, the calculation unit 28 calculates a lens distortion correction error at the coordinates of the corrected image on the basis of the coordinates of the corrected image and the optical center coordinates of the lens 12. The calculation unit 28 stores (saves) the lens distortion correction error in the storage unit 22 as a template used when the authentication unit 29 performs authentication. Note that details of the lens distortion correction error calculated by the calculation unit 28 will be described later.

The authentication unit 29 performs authentication processing (collation processing) for collating feature data stored in the storage unit 22 with registration data. Note that details of the authentication processing performed by the authentication unit 29 will be described later.

In the authentication apparatus 1 configured in this way, the sensor unit 10 captures a captured image of a living body. Then, in the authentication apparatus 1, the control unit 20 extracts a biometric image included in a region corresponding to the living body from the captured image acquired from the sensor unit 10, and performs authentication of the living body on the basis of the biometric image and a position of the biometric image in the captured image.

[Lens Distortion Correction Processing and Biometric Authentication Processing]

Next, the lens distortion correction processing and biometric authentication processing will be described. First, after describing an outline of the lens distortion correction processing, an outline of the biometric authentication processing will be described. Note that, in the following, description will be made in which a sensor, a lens, and an image capturing element used in conventional biometric authentication processing are simply referred to as a "sensors", a "lens", and an "image capturing element".

[Lens Distortion]

First, details of lens distortion in the lens distortion correction processing will be described. The conventional biometric authentication processing generally uses a captured image captured through a lens. In the captured image, lens distortion occurs due to the lens. Generally, as for the lens, the one lens (for example, a lens unit) is often configured by combining a plurality of single lenses. As a result, the lens distortion has complex nonlinear characteristics. As for the lens distortion, the magnitude, a range of influence, and the like are determined by design of the lens, for example, the number of components or a material. Moreover, the lens distortion is different for each individual lens because an error when the lens is assembled also affects the lens distortion.

[Lens Distortion Correction Processing]

Next, details of the lens distortion correction processing will be described. Conventionally, in a case where lens distortion is large, "lens distortion correction" which approximates and corrects the lens distortion by a polynomial is applied. For example, in the biometric authentication processing in which very high accuracy is needed, it is not possible to ignore deformation of a collation feature due to the lens distortion. Thus, in the conventional biometric authentication processing, highly accurate authentication processing is implemented by applying the lens distortion correction. The lens distortion correction processing is performed as follows.

First, in the lens distortion correction processing, an image of a known calibration pattern is captured by using the lens and the image capturing element. Then, in the lens distortion correction processing, a correction parameter (hereinafter referred to as a "lens distortion correction parameter") for restoring a pattern deformed by lens distortion is calculated on the basis of a captured image and the captured calibration pattern.

Subsequently, in the lens distortion correction processing, the captured image distorted by the lens is corrected by using the lens distortion correction parameter described above. Thus, a timing of calculating the lens distortion correction parameter is a timing of sensor calibration processing when a sensor used for the biometric authentication processing is shipped from a factory. The lens distortion correction parameter calculated by the sensor calibration processing is stored (saved) as the lens distortion correction information 141a in a memory (flash memory or the like) of the sensor, and used when the lens distortion correction processing is performed. Then, in the biometric authentication processing, the lens distortion is corrected and then the feature extraction processing or the like, which will be described later, is performed on a biometric image obtained by extracting a region corresponding to a living body by the extraction unit 25 from the captured image, thereby implementing the highly accurate biometric authentication processing.

[Details of Lens Distortion Correction Processing]

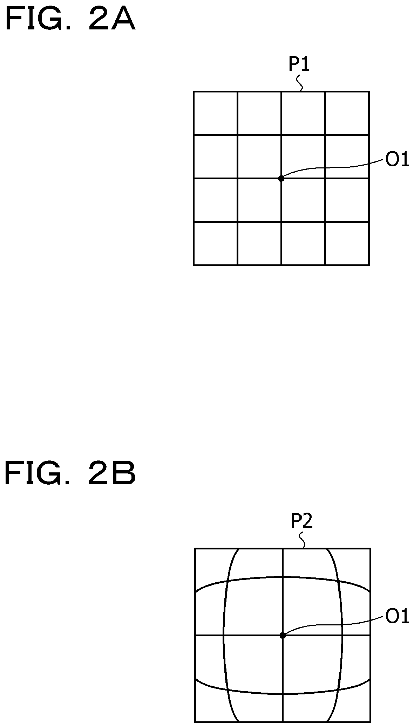

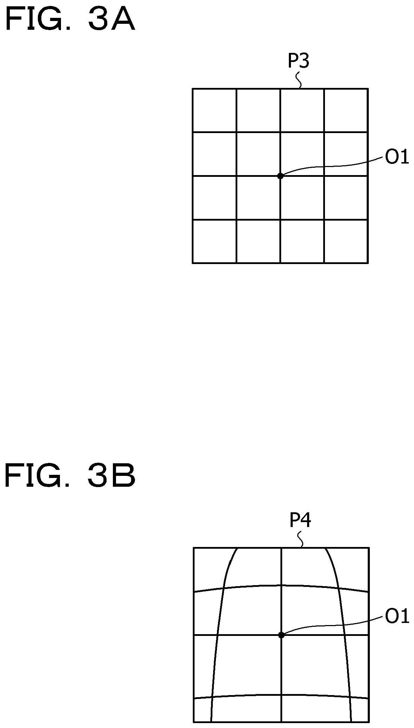

Next, details of the lens distortion correction processing will be described. First, in the lens distortion correction processing, lens distortion is generally approximated by a polynomial. The lens distortion may be roughly divided into two types: (1) radial distortion and (2) circumferential distortion (see FIGs. 2A, 2B, 3A, and 3B). FIG. 2A is a diagram schematically illustrating a state having no distortion in the radial distortion. FIG. 2B is a diagram schematically illustrating a state having distortion in the radial distortion. FIG. 3A is a diagram schematically illustrating a state having no distortion in the circumferential distortion. FIG. 3B is a diagram schematically illustrating a state having distortion in the circumferential distortion.

(1) The radial distortion is of a type in which an amount of the distortion depends only on a distance r from an optical center O1 of the lens, as indicated in an image P1 of FIG. 2A and an image P2 of FIG. 2B. On the other hand, (2) in the circumferential distortion, the amount of the distortion changes depending on the distance r from the optical center O1 of the lens, and the magnitude of the distortion also changes depending on a direction, as indicated in an images P3 of FIG. 3A and an image P4 of FIG. 3B.

Moreover, the lens distortion also includes distortion of a complex type in which (1) the radial distortion and (2) the circumferential distortion are combined. However, most of the lens distortion is (1) the radial distortion, and may be corrected. As indicated in the image P1 of FIG. 2A, the image P2 of FIG. 2B, the image P3 of FIG. 3A, and the image P4 of FIG. 3B, the polynomial used for approximation is different depending on the type of the lens distortion.

Here, a polynomial approximation expression of the lens distortion will be described. First, coordinates (x, y) represent coordinates on the image P1 in a case where there is no distortion (see FIG. 2A). The coordinates (x, y) are defined in a coordinate system centered on the optical center coordinates. Here, the optical center O1 is a position on an image capturing element, through which the optical axis of the lens passes. Although the optical center coordinates are generally the center O1 of the image P1 in terms of lens design, the optical center coordinates are not necessarily the center O1 of the image P1 due to an influence of a manufacturing error.

On the other hand, coordinates $(x_d, y_d)$ represent a point (coordinates) to which the coordinates (x, y) move under an influence of the lens distortion. That is, it is assumed that deformation from the coordinates (x, y) to the coordinates $(x_d, y_d)$ is given by the lens distortion. The following Expressions (1) to (6) approximate a correspondence relationship therebetween with a polynomial of the coordinates (x, y). Note that Expressions (1) to (3) indicate polynomials of the radial distortion, and Expressions (4) to (6) indicate polynomials of the circumferential distortion.

[Expression 1]

$$x_d = x(1 + k_1 r^2 + k_2 r^4) \qquad \cdots (1)$$

$$y_d = y(1 + k_1 r^2 + k_2 r^4) \qquad \cdots (2)$$

$$r^2 = x^2 + y^2 \qquad \cdots (3)$$

[Expression 2]

$$x_d = x + [2p_1 xy + p_2(r^2 + 2x^2)] \qquad \cdots (4)$$

$$y_d = y + [2p_1(r^2 + 2y^2) + p_2 xy] \qquad \cdots (5)$$

$$r^2 = x^2 + y^2 \qquad \cdots (6)$$

Here, $k_1$ and $k_2$ or $p_1$ and $p_2$ are constants representing the lens distortion (hereinafter referred to as "distortion correction parameters"). To apply the lens distortion correction, it is needed to obtain lens-specific correction parameters $(k_1, k_2, p_1,$ and $p_2)$ in advance.

[Details of Lens Distortion Calibration Processing]

Next, details of lens distortion calibration processing will be described. To perform the lens distortion correction processing, it is needed to calculate the lens-specific lens distortion correction parameters ($k_1$, $k_2$, $p_1$, and $p_2$) at the time of shipment from a factory (lens distortion calibration processing).

In the lens distortion calibration processing, a correspondence relationship between the coordinates (x, y) having no distortion and the coordinates ($x_d$, $y_d$) to which deformation is given is obtained by using a captured image obtained by capturing an image of a predetermined pattern, or the like. As for this correspondence relationship, the distortion correction parameters are obtained by least squares approximation or the like, and stored (saved) in the memory (storage unit 14) such as the flash memory of the sensor (sensor unit 10). At the time of the biometric authentication processing, the captured image is corrected by using the distortion correction parameters, and is used for the feature extraction processing or the like.

[Lens Distortion Correction Error]

Here, the correction of the lens distortion is simply approximation of the lens distortion by the polynomial. Since the lens is actually a combination of a plurality of single lenses as described above, the lens distortion has a complex nonlinear shape. Thus, not all the lens distortion is removed by the Expressions (1) to (6) described above, and an error remains (hereinafter referred to as "lens distortion correction error"). Since the authentication apparatus 1 applies the lens 12 to the highly accurate biometric authentication processing, it is not possible to ignore an influence of the lens distortion correction error. In other words, in the first embodiment, the influence of the lens distortion correction error is reduced.

Here, note that the magnitude of the lens distortion and the magnitude of the lens distortion correction error are independent. For example, in the correction of the lens distortion, even when the lens distortion itself is very large, in a case where approximation by the lens distortion correction processing is well applied, the lens distortion correction error becomes small.

On the other hand, in the correction of the lens distortion, even when the lens distortion itself is small, in a case where approximation by the lens distortion correction processing is not well applied, the lens distortion correction error becomes large.

Moreover, depending on a case where the lens distortion correction processing is applied, there may be a region where the error becomes large. The reason for this is as follows.

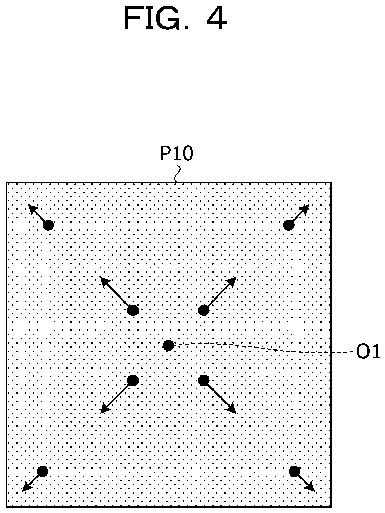

FIG. 4 is a diagram illustrating an example of the lens distortion correction error. First, in the lens distortion correction processing, in a case where the lens distortion correction parameter is calculated, the parameter is obtained by a least squares method or the like so that the error is minimized over an entire screen of a captured image P10. Thus, in the lens distortion correction processing, in a case where a specific region is focused on, the correction error may become large. For example, as illustrated in FIG. 4, in a central portion of the captured image P10, the lens distortion itself is generally small, but the lens distortion correction error may become large. This is due to an influence of the number of pixels in the captured image P10 used for approximate calculation. The number of pixels positioned at a certain distance r from a center O1 (strictly, an optical center) of the captured image P10 is larger in a peripheral portion of the captured image P10 where the distance r is larger. In other words, in the lens distortion correction processing, the peripheral portion of the captured image P10 having a large number of pixels is strongly affected by the correction error at the time of least squares calculation. As a result, in the lens distortion correction processing, the distortion correction error in the central portion of the captured image P10 may become large.

[Biometric Authentication Processing]

Next, the biometric authentication processing will be described. In the following, an example of palm vein authentication processing will be described. Note that, in the first embodiment, veins of a palm will be described, but the present invention is not limited to this.

In the biometric authentication processing, a captured image (for example, a vein image obtained by capturing an image of veins of a palm) is acquired, and feature data (feature amount) is extracted from the acquired captured image (feature extraction processing). Then, in the biometric authentication processing, the feature data extracted from the captured image is used for collation. In this case, in the biometric authentication processing, feature data for each user is stored in advance as registration data, and used for the biometric authentication processing. Specifically, in the biometric authentication processing, in a case where authentication is performed, the feature data (authentication data) is extracted from the captured image, and an authentication score (collation score) is calculated by comparing the extracted feature data and the registration data. This authentication score is a value representing how similar the registration data and the feature data (authentication data) are. In the biometric authentication processing, in a case where the authentication score exceeds a predetermined threshold, it is determined that a person is the person himself or herself registered in a database. Here, the threshold may be appropriately changed according to a security level.

Note that, in the biometric authentication processing, the normalization processing is performed before the feature data is extracted from the captured image (before the feature extraction processing). Here, the normalization processing is processing of correcting attitude variation of a feature of a living body such as a palm appearing in the captured image, and performing correction to a predetermined shape. For example, in the normalization processing, at least one of rotation and position of a living body such as a palm appearing in the captured image is corrected, and correction to a predetermined shape is performed. According to this biometric authentication processing, robust authentication may be implemented for attitude variation of a living body such as a palm. Note that details of the normalization processing will be described later.

Furthermore, in the biometric authentication processing, there are various features used for biometric authentication, but in the following, a local feature amount will be described as an example.

The local feature amount represents a local feature of a region such as a branch point of a vein, and various methods such as local phase quantization (LPQ) and a local binary pattern (LBP) are known. In the biometric authentication processing according to the first embodiment, coordinates (x, y) of the local feature amount and a feature amount (generally a vector) V are paired to constitute the feature amount.

An advantage of using the local feature amount is resistance to deformation. For example, in a case where the feature amount is extracted from the entire palm in the biometric authentication processing, the feature amount greatly changes due to deformation of the palm at the time of the biometric authentication processing. On the other hand, in a case where the local feature amount is used in the biometric authentication processing, an influence of the deformation is limited to the coordinates (x, y), and an influence on the feature amount V itself is small. Thus, in a case where the local feature amount is used in the biometric authentication processing, robust authentication may be performed for attitude variation.

Normally, in a case where the biometric authentication processing is performed, alignment processing is generally performed. In the alignment processing, positions (translation, rotation, scaling, and the like) of registration data and authentication data are aligned by searching processing or the like. In the biometric authentication processing, the positions may be roughly aligned by the normalization processing, but it is difficult to align the positions perfectly. Thus, in the biometric authentication processing, authentication is performed by performing alignment by the alignment processing at the time of collation between the registration data and the feature data. With this configuration, the highly accurate authentication processing may be performed in the biometric authentication processing.

[Normalization Processing]

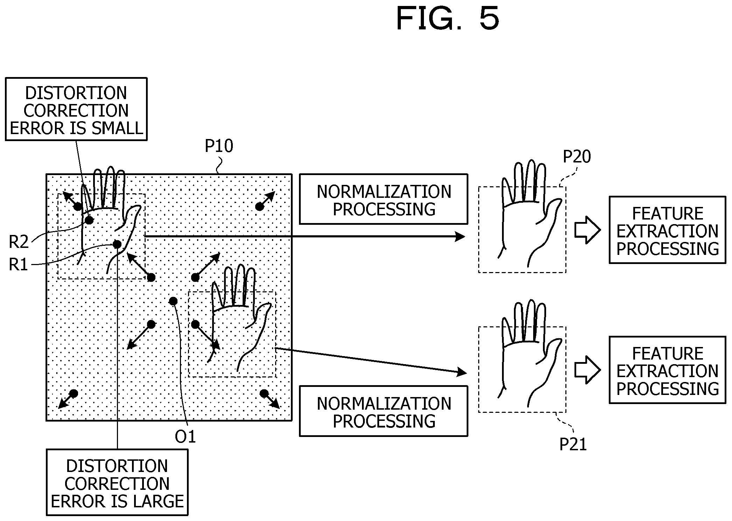

Next, details of the normalization processing described above will be described. FIG. 5 is a diagram illustrating an outline of the normalization processing in the biometric authentication. Note that FIG. 5 is exaggerated for the purpose of description.

As illustrated in FIG. 5, in the biometric authentication processing, generally, before the feature extraction processing, the normalization processing of correcting attitude variation is performed on biometric images P20 and P21 obtained by extracting a region corresponding to a living body from the captured image P10. In the normalization processing, variation due to rotation, positional deviation, and the like of the input living body included in the biometric images P20 and P21 is corrected. In the biometric authentication processing, by performing the normalization processing on the biometric images P20 and P21 before the feature extraction processing, robust authentication may be implemented for attitude variation of the input living body.

On the other hand, in the biometric authentication processing, by performing the normalization processing, information regarding positions where the biometric images P20 and P21 used for the feature extraction processing have been captured in the captured image P10 is lost (see FIG. 5). That is, in the biometric authentication processing, it is lost by the normalization processing whether the biometric images P20 and P21 used for the feature extraction processing are captured near an edge of the captured image P10 or near the center.

Moreover, in the biometric authentication processing, even in the same palm, there are regions R1 and R2 in the captured image P10 where the lens distortion correction error is large and small, respectively, and as a result of the normalization processing, positional information regarding the positions of the biometric images P20 and P21 in the captured image P10 is also lost. As a result, in the conventional biometric authentication processing, it is not possible to utilize the lens distortion correction error information in a case where the normalization processing is performed.

[Biometric Authentication Sensor]

Here, lens distortion of a palm vein sensor will be described as an example of the biometric authentication processing. In palm vein authentication, lens distortion tends to increase as a result of implementing close-up image capturing (authentication by holding a palm close to the sensor). Thus, the lens distortion correction processing is needed to implement the highly accurate biometric authentication. Furthermore, in a case where types of sensors used in the biometric authentication are different, normally, lens distortion characteristics are also different. Moreover, even when the sensors used in the biometric authentication are of the same type, in a case where lens manufacturers are different, the lens distortion characteristics are different.

[One Aspect of Problem]

As described in the column of BACKGROUND ART described above, in the existing biometric authentication processing, most of the lens distortion may be removed by applying the lens distortion correction processing, but the lens distortion correction error may remain. A degree to which the lens distortion correction error remains depends on characteristics of the lens. Specifically, the lens distortion correction error is determined by characteristics of distortion of the lens used for the biometric authentication and a degree of approximation of a distortion correction expression.

In the existing biometric authentication processing, in a case where a lens distortion correction image has a distortion correction error, an authentication feature extracted from the corresponding region is also distorted. As a result, the existing biometric authentication processing has a problem of deterioration of authentication accuracy. In particular, in a biometric authentication apparatus that needs very high accuracy, it is not possible to ignore an influence of the distortion correction error.

In this way, in order to implement the highly accurate biometric authentication processing, it is needed to appropriately deal with the lens distortion correction error. In particular, in the case of the biometric authentication processing, the normalization processing is applied on a biometric image (input image), and the feature extraction processing is applied on the biometric image subjected to the normalization processing. Thus, positional information indicating from which region of an original captured image (input image) data is taken is important for the biometric image (feature extraction image). However, in the existing biometric authentication processing, by performing the normalization processing on the biometric image, the positional information regarding a position of the biometric image used for the feature extraction processing is lost. As a result, in the conventional biometric authentication processing, it is not possible to appropriately process the lens distortion correction error.

[One Aspect of Problem-Solving Approach]

In the first embodiment, authentication accuracy of the biometric authentication processing is improved by reflecting the magnitude of the lens distortion correction error in the authentication processing. Specifically, in the first embodiment, the authentication accuracy of the biometric authentication processing is improved by reflecting a value of the lens distortion correction error for each region as a "weight" of the authentication processing as follows.

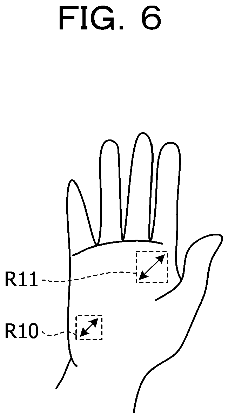

FIG. 6 is a diagram illustrating an outline of the authentication processing. As illustrated in FIG. 6, a region R10 with the small lens distortion correction error increases the weight of the authentication processing. On the other hand, a region R11 with the large lens distortion correction error decreases the weight of the authentication processing.

[Lens Distortion Correction Error Information]

Next, the lens distortion correction error information will be described. In the authentication apparatus 1 according to the first embodiment, the storage unit 14 stores (holds) the template 141 in order to reflect the lens distortion correction error in the authentication processing.

First, in the conventional biometric authentication processing, as described above, in a case where the normalization processing is performed, the positional information of the biometric image used for the feature extraction processing within the captured image (within the distortion correction image) is lost. Furthermore, in the conventional biometric authentication processing, information regarding a lens-specific lens distortion correction error (the lens distortion correction error information 141b) is needed to reflect the lens distortion correction error in the authentication processing. Thus, in the authentication apparatus 1 according to the first embodiment, the lens distortion correction error is reflected in the authentication processing by using information (a) and (b) below (lens distortion correction error information 141b).

(a) Optical center coordinates and normalization parameter (template-specific information)
(b) Lens distortion correction error parameter (lens-specific information)

In the following, details of (a) and (b) will be described.

[Optical Center Coordinates and Normalization Parameter (Template-Specific Information)]

First, (a) optical center coordinates and normalization parameter will be described.

The magnitude of lens distortion may be expressed by an approximation expression using a coordinate system centered on the optical center coordinates. Therefore, the lens distortion correction error may be calculated by the coordinate system centered on the optical center coordinates. Thus, the optical center coordinates and the normalization parameter (scaling ratio) are needed to calculate the lens distortion correction error.

First, the optical center coordinates will be described.

As for the optical center coordinates, the optical center coordinates in a captured image before the lens distortion correction processing are stored (saved) as the lens distortion correction error information 141b of the template 141 of the storage unit 14. The optical center coordinates are generally calculated when the lens distortion correction parameter is calculated.

Next, the normalization parameter will be described.

As for the normalization parameter, in a case where scaling $\alpha$, a rotation angle $\theta$, and translation ($e_x$, $e_y$) are applied as the normalization processing, Coordinate transformation expression (7) is as follows.
[Expression 3]

$$\begin{pmatrix} x_n \\ y_n \end{pmatrix} = \alpha \begin{pmatrix} \cos\theta & -\sin\theta \\ \sin\theta & \cos\theta \end{pmatrix} \begin{pmatrix} x \\ y \end{pmatrix} + \begin{pmatrix} e_x \\ e_y \end{pmatrix} \qquad \cdots (7)$$

Here, coordinates after the normalization processing are coordinates ($x_n$, $y_n$), and coordinates before the normalization processing (after the lens distortion correction processing) are coordinates ($x$, $y$).

The feature extraction processing is executed for each biometric image (feature extraction image) of the normalization processing. In this case, the coordinates ($x$, $y$) of a lens distortion correction image corresponding to the coordinates ($x_n$, $y_n$) may be calculated by inversely changing Expression (7) described above.

Therefore, in the authentication apparatus 1, by storing (saving) the normalization parameters ($\alpha$, $\theta$, and ($e_x$, $e_y$)) as the lens distortion correction error information 141b of the template 141 of the storage unit 14, the coordinates ($x$, $y$) of the lens distortion correction image may be calculated for the biometric image (feature extraction image after the normalization processing). Here, the normalization parameter has a value specific to each template 141.

[Lens Distortion Correction Error Parameter (Lens-Specific Information)]

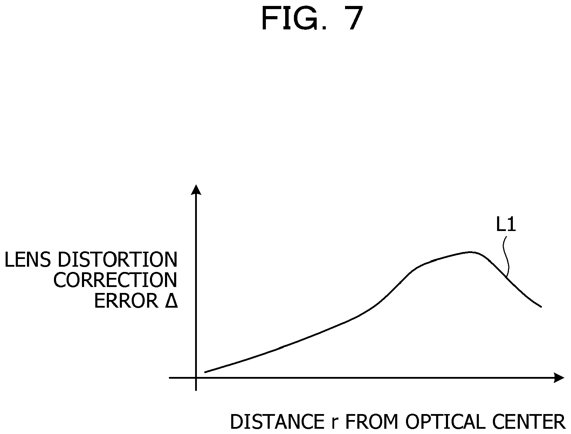

Next, the lens distortion correction error parameter will be described. FIG. 7 illustrates an outline of calculation of the lens distortion correction error parameter. In FIG. 7, a horizontal axis indicates a distance r from an optical center, and a vertical axis indicates a lens distortion correction error $\Delta$. Furthermore, a curve L1 indicates a characteristic of the lens distortion correction error parameter.

The authentication apparatus 1 according to the first embodiment calculates a parameter representing the lens distortion correction error in advance, and uses a calculation result for the authentication processing. For example, in a case where the lens distortion correction error depends on the distance r from the optical center (for example, a lens having circumferential distortion), the lens distortion correction error $\Delta$ is calculated as a function of the distance r from the optical center as indicated in Expression (8) (in a case where the distance r is taken up to the second order).
[Expression 4]

$$\text{lens distortion correction error } \Delta = q_0 + q_1 r + q_2 r^2 \qquad \cdots (8)$$

Here, $q_0$, $q_1$, and $q_2$ are the lens distortion correction error parameters. Specifically, as for the lens distortion correction error parameter, an image of a predetermined calibration parameter is captured, and a correspondence relationship between the distance r from the optical center and the distortion correction error is calculated by the least squares method.

The lens distortion correction error parameter is calculated in advance for each object to be managed and stored (saved) in the template 141. For example, in a case where the lens distortion correction error parameter is managed for each type of lens (for example, a lens of a company A, a lens of a company B, ...), the authentication apparatus 1 calculates the lens distortion correction error for each type of lens and stores the lens distortion correction error in the template 141 of the storage unit 14. Furthermore, in a case where the lens distortion correction error parameter is managed for each individual sensor, the authentication apparatus 1 calculates the lens distortion correction error for each individual sensor at the time of the sensor calibration processing and stores (saves) the lens distortion correction error in the template 141 of the storage unit 14 of the sensor unit 10.

In this way, the authentication apparatus 1 may implement the highly accurate biometric authentication by reflecting a remaining lens distortion correction error in the authentication processing even after the lens distortion correction processing.

Furthermore, by storing the optical center coordinates and normalization information as the template 141 in the storage unit 14, even in the general biometric authentication that applies the normalization processing, the authentication apparatus 1 may correctly reflect the lens distortion correction error in the authentication processing.

[Configuration of Template]

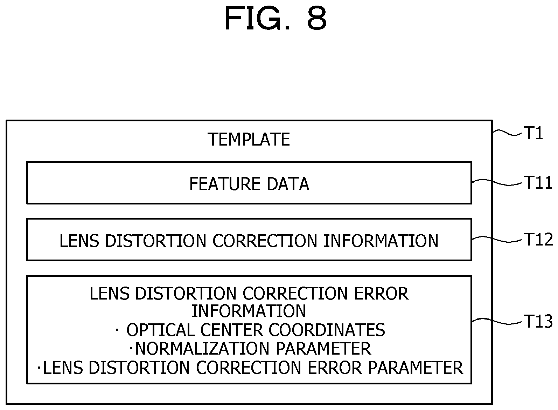

Next, a configuration of a template stored in the storage unit 22 will be described. FIG. 8 is a diagram illustrating an example of the configuration of the template. A template T1 illustrated in FIG. 8 includes feature data T11, lens distortion correction information T12, and lens distortion correction error information T13.

The feature data T11 is data for authentication (data for collation) used in the biometric authentication processing. In the first embodiment, the local feature amount is used as the feature amount. The local feature amount is a feature amount calculated from a neighboring region of a branch point of a palm, or the like. In the biometric authentication processing, by using the local feature amount, robust authentication may be implemented for deformation of the palm. As the feature data, a plurality of pairs of coordinates (x, y) at which a feature is extracted and a vector V of the local feature amount is stored. The authentication apparatus 1 stores (saves) necessary information in the storage unit 22 as the template T1 in order to reflect the lens distortion correction error information in the authentication processing.

The lens distortion correction information T12 includes the lens distortion correction parameter. The lens distortion correction parameter is a parameter for capturing an image of a known calibration pattern by using the lens and image capturing element described above and for restoring a pattern deformed by lens distortion on the basis of a captured image and the captured calibration pattern.

The lens distortion correction error information T13 includes the optical center coordinates, the normalization parameter, and the lens distortion correction error parameter. With this configuration, by using the optical center coordinates, the normalization parameter, and the lens distortion correction error parameter, the authentication apparatus 1 may calculate a lens distortion correction error corresponding to coordinates $(x_n, y_n)$ of a feature extraction image after the normalization processing.

[Lens Distortion Correction Error Calculated by Calculation Unit]

The calculation unit 28 calculates a lens distortion correction error corresponding to each point of a biometric image (feature extraction image) used for the authentication processing. Specifically, the calculation unit 28 calculates coordinates (x, y) of a lens distortion correction image corresponding to coordinates $(x_n, y_n)$ of the biometric image (feature extraction image). Here, the coordinates $(x_n, y_n)$ of the biometric image (feature extraction image) are coordinates to which the normalization processing is applied. Thus, the calculation unit 28 calculates the coordinates (x, y) of the lens distortion correction image before the normalization processing by applying inverse transformation by using the normalization parameter included in the template T1.

Note that transformation processing is performed by the normalization processing unit 26 described above. By using the coordinates (x, y) of the lens distortion correction image subjected to the inverse transformation processing by the normalization processing unit 26 and the optical center coordinates stored (saved) in the lens distortion correction error information T13, the calculation unit 28 calculates a lens distortion correction error Δ at a point corresponding to the coordinates $(x_n, y_n)$ of the biometric image (feature extraction image) by using the lens distortion correction error parameter (see Expression (8) described above).

[Flow of Processing]

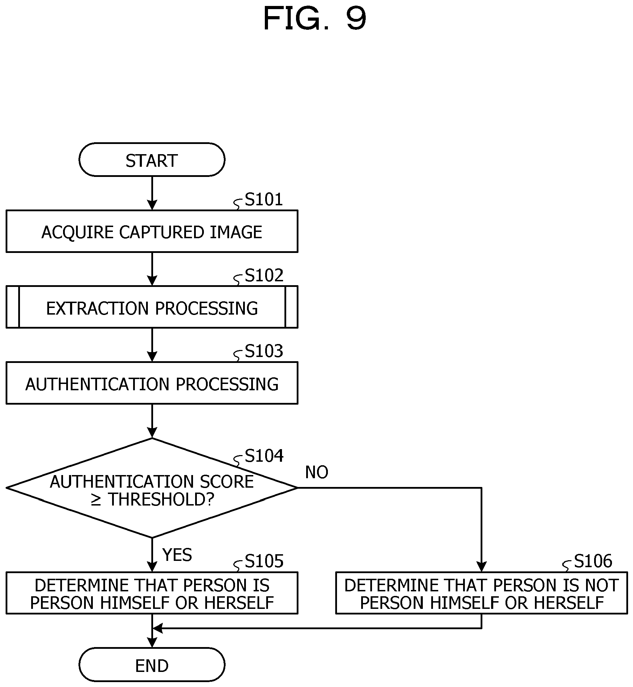

FIG. 9 is a flowchart illustrating a procedure of the authentication processing executed by the authentication apparatus 1 according to the first embodiment. As merely an example, this authentication processing is started in a case where the authentication apparatus 1 described above receives an authentication request of a living body.

As illustrated in FIG. 9, the sensor unit 10 acquires a captured image (feature image) by capturing an image of the living body (Step S101), and the control unit 20 executes extraction processing of extracting a biometric image included in a region corresponding to the living body from the captured image (Step S102). In this case, the control unit 20 acquires the captured image, lens distortion correction information, and lens distortion correction error information from the sensor unit 10. Thereafter, the authentication apparatus 1 proceeds to Step S103, which will be described later.

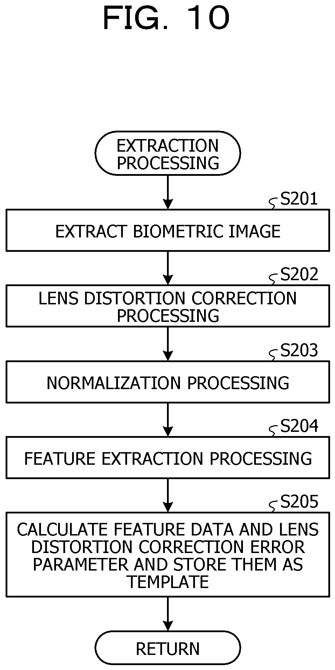

FIG. 10 is a flowchart illustrating a detailed procedure of the extraction processing. As illustrated in FIG. 10, first, the extraction unit 25 extracts the biometric image included in the region corresponding to the living body from the captured image (Step S201), and executes the lens distortion correction processing on the biometric image (feature extraction image) (Step S202).

Subsequently, the normalization processing unit 26 performs the normalization processing on the biometric image (feature extraction image) (Step S203). Specifically, the normalization processing unit 26 performs the normalization processing of correcting variation due to rotation, positional deviation, and the like of the input living body included in the biometric image (feature extraction image).

Thereafter, the feature extraction unit 27 performs the feature extraction processing on the biometric image (feature extraction image) subjected to the normalization processing by the normalization processing unit 26 (Step S204). Specifically, the feature extraction unit 27 extracts feature data from the biometric image (feature extraction image).

Subsequently, the calculation unit 28 calculates the feature data extracted by the feature extraction unit 27 and a lens distortion correction error parameter, and stores them as the template T1 of the storage unit 22 (Step S205). Specifically, the calculation unit 28 calculates a lens distortion correction error corresponding to each point of the biometric image (feature extraction image) used for the authentication processing by the authentication unit 29. For example, the calculation unit 28 calculates coordinates $(x, y)$ of a lens distortion correction image corresponding to coordinates $(x_n, y_n)$ of the biometric image (feature extraction image). Here, the coordinates $(x_n, y_n)$ of the biometric image (feature extraction image) are coordinates to which the normalization processing is applied. Thus, the calculation unit 28 calculates the coordinates $(x, y)$ of the lens distortion correction image before the normalization processing by applying inverse transformation by using the normalization parameter included in the template 141. Note that transformation processing is performed by the normalization processing unit 26 described above. By using the coordinates $(x, y)$ of the lens distortion correction image subjected to the inverse transformation processing by the normalization processing unit 26 and the optical center coordinates stored in lens distortion correction error data of the template 141, the calculation unit 28 calculates a lens distortion correction error $\Delta$ at a point corresponding to the coordinates $(x_n, y_n)$ of the biometric image (feature extraction image) by using the lens distortion correction error parameter (see Expression (8) described above). It is assumed that the lens distortion correction error $\Delta$ is obtained by a function of a distance r from an optical center as illustrated in FIG. 7 described above (circumferential distortion). In the first embodiment, when the lens distortion correction error is expressed as the function of the distance r from the optical center, the lens distortion correction error may be expressed with a small number of parameters. As a result, according to the first embodiment, it is possible to reduce an amount of data and to speed up processing. After Step S205, the authentication apparatus 1 returns to the main routine of FIG. 9.

Returning to FIG. 9, Step S103 and subsequent steps will be described.

In Step S103, the authentication unit 29 performs the authentication processing (collation processing) for collating the feature data stored in the storage unit 22 with registration data.

[Details of Authentication Processing]

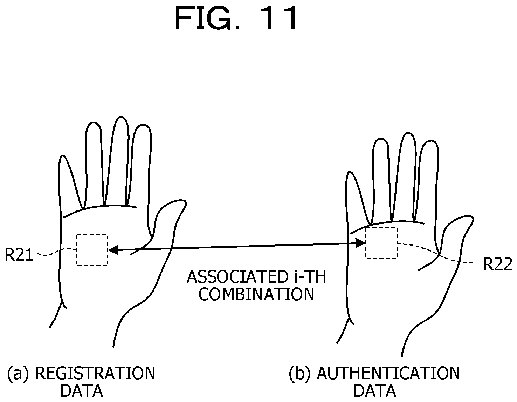

FIG. 11 is a diagram illustrating an outline of the authentication processing. The authentication unit 29 uses the local feature amount for the authentication processing. In the biometric authentication processing using the local feature amount, processing of taking correspondence between feature points is performed first. That is, the authentication unit 29 compares feature points of the registration data (registration side) and feature points of the authentication data (collation side), and associates feature points that are presumed to be the same feature points with each other. In this case, the authentication unit 29 associates the feature points with each other by further using coordinates $(x, y)$ of the feature points in addition to comparing the feature amounts themselves.

Here, it is assumed that the authentication unit 29 has N (N = 2 or more) pairs of the associated feature points, and that a local feature amount score of an i-th pair of the feature points is $S_i$. By using the local feature amount score $S_i$, the authentication unit 29 calculates a final score used when whether or not a person is the person himself or herself is determined. Specifically, the authentication unit 29 uses, as the final score, an average value of the local feature amount score $S_i$, or the like. In the first embodiment, weights $W_0$, $W_1$, and $_i$ that reflect the lens distortion correction error are applied to the final score calculation (Score). Each of the weights $W_0$, $W_1$, and $_i$ that reflect the lens distortion correction error is a weight (Weight) of the i-th pair of registration data and authentication data, and is calculated by the authentication unit 29 on the basis of each lens distortion correction error. That is, the authentication unit 29 uses the lens distortion correction error of the registration data and the lens distortion correction error of the authentication data for the authentication processing. The weight (Weight) is calculated by the following Expression (9) by using the lens distortion correction error $\Delta$ in the corresponding region.

[Expression 5]

$$\text{Weight} = \exp(-\alpha\Delta) \qquad \cdots (9)$$

Here, a (positive constant) is a coefficient for calculating the weight from the lens distortion correction error $\Delta$. The weight (Weight) becomes smaller as the lens distortion correction error $\Delta$ becomes larger.

Since the authentication unit 29 may reflect the magnitude of the lens distortion correction error in the authentication processing in the following Expression (10) of the final score calculation (Score) by the weight (Weight) term described above, the authentication accuracy may be improved.

[Expression 6]

$$\text{Score} = \sum_{i=1}^{N} \frac{w_{0,i} w_{1,i} S_i}{W} \qquad \cdots (10)$$

$S_i$ indicates a score of the i-th combination in which the feature point of the registration data (registration side) and the feature point of the authentication data (collation side) are presumed to be the same feature points, and the feature points are associated with each other.

$W_0$ and $W_1$ indicate the weight (Weight) of the registration data of the i-th combination in which the feature point of the registration data (registration side) and the feature point of the authentication data (collation side) are presumed to be the same feature points, and the feature points are associated with each other.

$W_{1,i}$ indicates the weight (Weight) of the authentication data of the i-th combination in which the feature point of the registration data (registration side) and the feature point of the authentication data (collation side) are presumed to be the same feature points, and the feature points are associated with each other.

W indicates a total weight (Weight).

Returning to FIG. 9, description of Step S104 and subsequent steps is continued.

In Step S104, the authentication unit 29 determines whether or not an authentication score (collation score) collated in the authentication processing of Step S103 described above is equal to or greater than a threshold. In a case where the authentication score is equal to or greater than the threshold (Step S104: Yes), the authentication unit 29 determines that a person is the person himself or herself (Step S105). After Step S105, the authentication apparatus 1 ends this processing. On the other hand, in a case where the authentication score is not equal to or greater than the threshold (Step S104: No), the authentication unit 29 determines that the person is not the person himself or herself (Step S106). In this case, the overall management unit 24 may cause a speaker or a display monitor (not illustrated) to output a warning indicating that the person is not the person himself or herself. After Step S106, the authentication apparatus 1 ends this processing.

According to the first embodiment described above, when a captured image of a living body is acquired, a biometric image included in a region corresponding to the living body is extracted from the captured image, and authentication of the living body is performed on the basis of the extracted biometric image and a position of the biometric image in the captured image. As a result, high authentication accuracy may be obtained regardless of the position of the living body in the captured image.

Furthermore, according to the first embodiment, at the time of the processing of performing authentication by acquiring, from the sensor unit 10, lens distortion correction error information regarding a lens distortion correction error remaining after lens distortion correction of the lens 12 that has captured the image of the living body, the authentication of the living body is performed by reflecting the lens distortion correction error information in positional information in the captured image. As a result, the lens distortion correction error remaining after the lens distortion correction may be corrected.

Furthermore, according to the first embodiment, the normalization processing unit 26 performs normalization on the biometric image, and the lens distortion correction error information includes optical center coordinates of the lens 12 and a normalization parameter when the normalization processing unit 26 performs the normalization. As a result, the positional information of the biometric image lost by the normalization processing may be restored.

Furthermore, according to the first embodiment, the authentication of the living body is performed by extracting, by the feature extraction unit 27, feature data from the biometric image subjected to the normalization, and collating, by the authentication unit 29, the feature data and previously registered registration data to calculate an authentication score. Moreover, since the authentication unit 29 reflects the lens distortion correction error information as a weight of the authentication score when the authentication score is calculated, high authentication accuracy may be obtained.

Furthermore, according to the first embodiment, since the lens distortion correction error is calculated by a polynomial based on the distance r from the optical center O1 of the lens 12, high authentication accuracy may be obtained.

Furthermore, according to the first embodiment, since the calculation unit 28 acquires the lens distortion correction error from the sensor unit 10, high authentication accuracy may be obtained.

Furthermore, according to the first embodiment, the calculation unit 28 calculates coordinates of a corrected image after the lens distortion correction corresponding to predetermined coordinates of the biometric image on the basis of the optical center coordinates of the lens 12 and the normalization parameter. Additionally, since the calculation unit 28 calculates the lens distortion correction error at the coordinates of the biometric image (corrected image) on the basis of the coordinates of the corrected image and the optical center coordinates of the lens 12, high authentication accuracy may be obtained.

[Second Embodiment]

Next, a second embodiment will be described. Although the lens distortion correction error parameter is stored in the storage unit 14 of the sensor unit 10 in the first embodiment described above, in the second embodiment, a lens ID that identifies a lens is used in a sensor unit to manage lens distortion correction error data including a lens distortion correction error parameter. Note that the same reference signs are assigned to the same configurations as those of the authentication apparatus 1 according to the first embodiment described above, and detailed description thereof will be omitted.

[System Configuration]

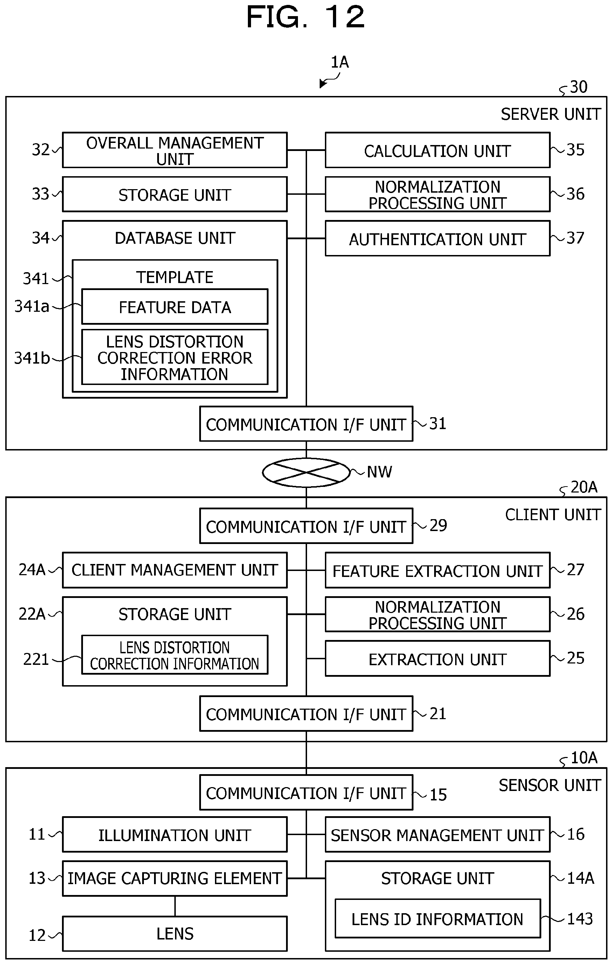

FIG. 12 is a block diagram illustrating an example of a functional configuration of an authentication system according to the second embodiment. An authentication system 1A illustrated in FIG. 12 is a system that is configured by a client-server system and manages lens distortion correction error information data including a lens distortion correction error parameter by using a lens ID that uniquely identifies a lens type.

As illustrated in FIG. 12, the authentication system 1A includes a sensor unit 10A, a client unit 20A, and a server unit 30. The client unit 20A and the server unit 30 are connected via a network NW. The network NW may be an optional type of communication network such as the Internet or a LAN regardless of whether the network NW is wired or wireless.

[Configuration of Sensor Unit]

First, the sensor unit 10A will be described. The sensor unit 10A includes a storage unit 14A in place of the storage unit 14 described above. The storage unit 14A stores lens ID information for identifying the lens 12.

[Configuration of Client Unit]

Next, a configuration of the client unit 20A will be described. The client unit 20A includes the communication I/F unit 21, the extraction unit 25, the normalization processing unit 26, and the feature extraction unit 27 described above. Moreover, the client unit 20A further includes a storage unit 22A, a client management unit 24A, and a communication I/F unit 21A.

The storage unit 22A stores data for use in an OS executed by the client unit 20A, and in an image capturing program and an authentication program executed by the client unit 20A. The storage unit 22A is implemented by using various semiconductor memory elements, and may employ a RAM or a flash memory, for example. Furthermore, the storage unit 22A includes lens distortion correction information 221 for correcting lens distortion of the lens 12.

The client management unit 24A performs overall control of the sensor unit 10A and the client unit 20A. As one embodiment, the client management unit 24A may be implemented by a hardware processor such as a CPU or an MPU. Here, a CPU or an MPU is exemplified as an example of the processor, but regardless of a general-purpose type or a specialized type, the client management unit 24A may be implemented by an optional processor, for example, a GPU or a DSP, or a DLU or a GPGPU. Additionally, the client management unit 24A may also be implemented by a hard wired logic such as an ASIC or an FPGA.

The communication I/F unit 21A corresponds to an example of an interface that controls communication with another device such as the server unit 30, for example. As one embodiment, the communication I/F unit 21A corresponds to a network interface card or the like, such as a LAN card. For example, the communication I/F unit 21A receives request data from the server unit 30, and outputs a sensor data upload instruction to the server unit 30.

[Configuration of Server Unit]

Next, a configuration of the server unit 30 will be described. The server unit 30 performs biometric authentication on the basis of a captured image and a lens ID, which are input from each of a plurality of the client units 20A via the network NW. The server unit 30 includes a communication I/F unit 31, an overall management unit 32, a storage unit 33, a database unit 34, a calculation unit 35, a normalization processing unit 36, and an authentication unit 37.

The communication I/F unit 31 corresponds to an example of an interface that controls communication with another device such as the client unit 20A, for example. As one embodiment, the communication I/F unit 31 corresponds to a network interface card or the like, such as a LAN card. For example, the communication I/F unit 31 receives a captured image, a lens ID, and lens distortion correction data transmitted from the client unit 20A, and outputs a sensor data upload instruction to the client unit 20A.

The overall management unit 32 performs overall control of the server unit 30, the sensor unit 10A, and the client unit 20A. As one embodiment, the overall management unit 32 may be implemented by a hardware processor such as a CPU or an MPU. Here, a CPU or an MPU is exemplified as an example of the processor, but regardless of a general-purpose type or a specialized type, the overall management unit 32 may be implemented by an optional processor, for example, a GPU or a DSP, or a DLU or a GPGPU. Additionally, the overall management unit 32 may also be implemented by a hard wired logic such as an ASIC or an FPGA.

The storage unit 33 stores data for use in an OS executed by the server unit 30, and in an image capturing program and an authentication program executed by the server unit 30 and the client unit 20A. The storage unit 33 is implemented by using various semiconductor memory elements, and may employ a RAM or a flash memory, for example.

The database unit 34 stores ID information or the like for the authentication unit 37 to identify a biometric image, a registration template in which a previously registered biometric image of a user is registered, and the sensor unit 10. As one embodiment, the database unit 34 may be implemented as an auxiliary storage device in the authentication system 1A. For example, the database unit 34 may employ an HDD, an SSD, or the like.

The calculation unit 35 calculates coordinates of a corrected image after lens distortion correction corresponding to predetermined coordinates of a biometric image on the basis of optical center coordinates of the lens 12 and a normalization parameter when the normalization processing unit 36 performs normalization processing on the biometric image. Moreover, the calculation unit 35 calculates a lens distortion correction error at the coordinates of the corrected image on the basis of the coordinates of the corrected image and the optical center coordinates of the lens 12. The calculation unit 35 stores (saves) the lens distortion correction error in the database unit 34 as a template used when the authentication unit 37 performs authentication. Note that, since a calculation method of the lens distortion correction error calculated by the calculation unit 35 is similar to that of the first embodiment described above, detailed description thereof will be omitted.

The normalization processing unit 36 performs normalization processing on a biometric image. Specifically, the normalization processing unit 36 performs normalization processing of correcting attitude variation on a biometric image. In the normalization processing, variation due to rotation, positional deviation, and the like of an input living body included in the biometric image is corrected. Note that, since the normalization processing by the normalization processing unit 36 is similar to that of the first embodiment described above, detailed description thereof will be omitted.

The authentication unit 37 performs authentication processing of collating feature data stored in the database unit 34 with registration data. Note that, since the authentication processing by the authentication unit 37 is similar to that of the first embodiment described above, detailed description thereof will be omitted.

[Management Method of Lens Distortion Correction Error]

Next, a management method of the lens distortion correction error executed by the authentication system 1A will be described. Conventionally, an individual difference of lens distortion of each of a plurality of the lenses 12 may be small, and calibration processing may be unnecessary for each individual of the lenses 12. In this case, the server unit 30 may use a representative lens distortion correction error parameter and lens distortion correction parameter for each lens type without performing calibration processing for each individual sensor. At this time, although it is not possible for the server unit 30 to absorb the individual difference of the lenses, when the individual difference is sufficiently small, the number of man-hours for the calibration processing may be reduced.

The server unit 30 manages lens distortion correction error information by the lens ID. Thus, the storage unit 14A of the sensor unit 10A stores (saves) lens ID information 143 (identification information) for identifying a lens. The client unit 20A uses the lens distortion correction information 221 (lens distortion correction parameter) stored in the storage unit 22A of the client unit 20A in a case where feature extraction is performed on a captured image. Moreover, the server unit 30 stores (saves) lens distortion correction error data (lens distortion correction error parameter) used in authentication processing by the authentication unit 37 in a template 341 of the database unit 34.

[Configuration of Template]

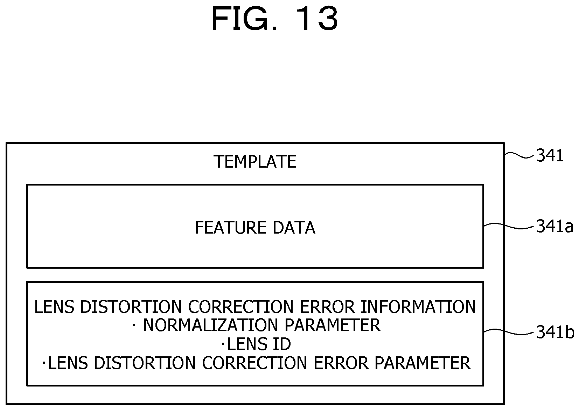

FIG. 13 is a diagram schematically illustrating a configuration of the template 341. The template 341 illustrated in FIG. 13 stores feature data 341a and lens distortion correction error information 341b described above in the first embodiment. Moreover, the lens distortion correction error information 341b includes the normalization parameter and the lens distortion correction error parameter described above in the first embodiment. Moreover, the lens distortion correction error information 341b further includes a lens ID. Since the feature data 341a and the normalization parameter are similar to those of the first embodiment described above, detailed description thereof will be omitted.

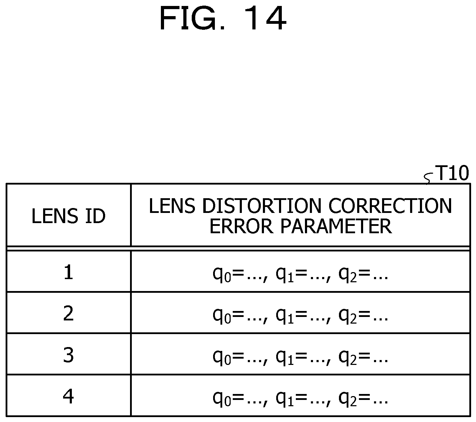

FIG. 14 is a diagram illustrating an example of a lens distortion correction error parameter table. As illustrated in FIG. 14, a lens ID is associated with a specific lens, and is used by the server unit 30 to search for a lens distortion correction error by using the lens ID as an index. The template 341 stores lens distortion correction parameters associated with a plurality of lens IDs. The server unit 30 acquires the lens ID from the client unit 20A via the network NW, and acquires the lens distortion correction error information 341b corresponding to the acquired lens ID from the database unit 34. In this case, in the authentication system 1A, the server unit 30 executes authentication processing similar to that of the first embodiment described above by using the lens distortion correction error parameter or the like according to the lens ID.

[Optical Center Coordinates]

Note that the second embodiment is applied to a case where the individual difference of the lenses is small. In this case, the center of a captured image (captured image center) may simply be used as the optical center coordinates, instead of using a value specific to each individual sensor. In this case, in a case where the individual difference of the lenses is negligibly small, manufacturing accuracy is very high. Therefore, it is sufficient to use the center of the captured image instead of the optical center coordinates.

According to the second embodiment described above, since the server unit 30 acquires a lens ID that identifies the lens 12 from the sensor unit 10A, and acquires a lens distortion correction error corresponding to the lens ID, high authentication accuracy may be obtained.

[Modification of First and Second Embodiments]

Although the content of the present disclosure is as described above, the present disclosure is not limited to this, and may have the following configuration.

In a modification of the present disclosure, the "lens distortion correction error" of the registration data may be developed in advance (speeding-up effect). According to the first and second embodiments described above, while an effect of improving accuracy of biometric authentication may be obtained, it is needed to calculate the lens distortion correction error $\Delta$, which is disadvantageous in terms of processing time. Here, although it is not possible to calculate the lens distortion correction error $\Delta$ corresponding to the authentication data unless it is at the time of collation, the registration data may be calculated in advance. Thus, in the modification, a configuration may be adopted in which, in a case where the present disclosure is applied to large-scale 1 : N authentication (identification only by a living body without an ID), the lens distortion correction error $\Delta$ of the registration data is calculated in advance and developed in the storage unit (memory ). By adopting such a configuration, an effect of reducing time for the authentication processing, especially in the large-scale 1 : N authentication.

Furthermore, in the modification of the present disclosure, the "lens distortion correction error" may be reflected in quality determination of the registration data. The use of the lens distortion correction error $\Delta$ according to the present disclosure is not limited to the authentication processing. For example, in the present disclosure, the lens distortion correction error $\Delta$ may also be used for quality determination of the registration data. In the biometric authentication processing, generally, a plurality of pieces of the registration data is stored (saved) and used for the biometric authentication processing. In this case, quality of the registered data is generally checked. The reason for this is that when the quality of the registration data is poor, the biometric authentication processing may not be performed frequently. As one method for checking the quality of the registration data, a configuration using the lens distortion correction error $\Delta$ may be adopted. For example, according to the modification of the present disclosure, check processing of an average value of the lens distortion correction errors $\Delta$ in a captured image region in which the registration data is created is performed, and registration of the registration data is permitted in a case where the average value by the check processing is equal to or smaller than a predetermined threshold. In a case where such check processing is not performed, registration data using a region with a large lens distortion correction error $\Delta$ is registered in the authentication apparatus 1, and the biometric authentication processing may not operate normally. Thus, according to the modification of the present disclosure, robust authentication may be implemented by performing confirmation processing of confirming the lens distortion correction error $\Delta$ as the check processing of checking the quality of the registration data.

Furthermore, in the modification of the present disclosure, the "lens distortion correction error" may be used in a case where alignment is performed in the authentication processing. As a method of using the lens distortion correction error $\Delta$ according to the modification of the present disclosure, a configuration may be adopted in which the lens distortion correction error $\Delta$ is used for alignment. Hereinafter, in the modification of the present disclosure, an example will be described in which the lens distortion correction error $\Delta$ is used for the alignment processing in a case where a local feature amount is used. In the alignment processing, normalization parameters (rotation angle $\theta$, translation amount ($e_x$, $e_y$), and the like) are changed to obtain parameters that minimize an evaluation function E representing positional deviation. As the weighting at this time, the lens distortion correction error $\Delta$ is utilized. A feature point with a large lens distortion correction error $\Delta$ is considered to have a low degree of reliability. Therefore, by lowering the weight of such a point, more accurate alignment may be implemented.

[Authentication Program]

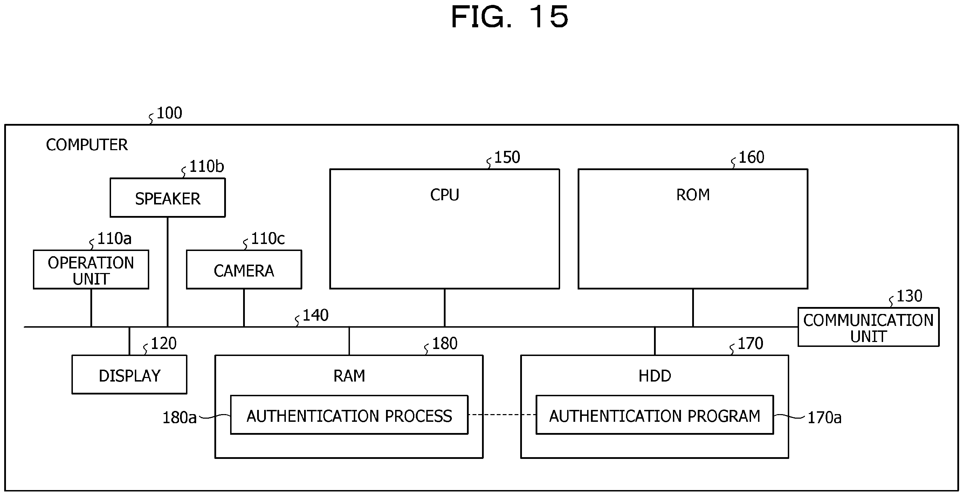

Furthermore, various types of processing described in the embodiments described above may be implemented by executing a program prepared in advance by a computer such as a personal computer or a workstation. Thus, hereinafter, an example of a computer that executes an advertisement display program having functions similar to those in the embodiments described above will be described with reference to FIG. 15.

FIG. 15 is a diagram illustrating a hardware configuration example of a computer that executes an authentication program according to the first and second embodiments. As illustrated in FIG. 15, a computer 100 includes an operation unit 110a, a speaker 110b, a camera 110c, a display 120, and a communication unit 130. Moreover, the computer 100 includes a CPU 150, a ROM 160, an HDD 170, and a RAM 180. These components 110 to 180 are each connected via a bus 140.

As illustrated in FIG. 15, the HDD 170 stores an authentication program 170a that exhibits functions similar to those of the sensor management unit 16, the overall management unit 24, the calculation unit 28, the normalization processing unit 26, the feature extraction unit 27, and the authentication unit 29 indicated in the first embodiment described above. This authentication program 170a may be integrated or separated similarly to each component of the sensor management unit 16, the overall management unit 24, the calculation unit 28, the normalization processing unit 26, the feature extraction unit 27, and the authentication unit 29 illustrated in FIG. 1. In other words, all pieces of data indicated in the first embodiment described above do not necessarily have to be stored in the HDD 170, and it is sufficient that data for use in processing is stored in the HDD 170.

Under such an environment, the CPU 150 reads the authentication program 170a from the HDD 170, and develops the authentication program 170a in the RAM 180. As a result, the authentication program 170a functions as an authentication process 180a as illustrated in FIG. 15. The authentication process 180a develops various types of data read from the HDD 170 in a region allocated to the authentication process 180a in a storage region included in the RAM 180, and executes various types of processing by using the various types of developed data. For example, as an example of the processing to be executed by the authentication process 180a, the processing illustrated in FIG. 9 or the like is included. Note that all the processing units indicated in the first embodiment described above do not necessarily have to operate in the CPU 150, and it is sufficient that a processing unit corresponding to processing to be executed is virtually implemented.

Note that the authentication program 170a described above does not necessarily have to be stored in the HDD 170 or the ROM 160 from the beginning. For example, the authentication program 170a is stored in a "portable physical medium" such as a flexible disk, which is what is called an FD, a CD-ROM, a DVD, a magneto-optical disk, or an IC card to be inserted into the computer 100. Additionally, the computer 100 may acquire and execute the authentication program 170a from these portable physical media. Furthermore, the authentication program 170a may be stored in another computer, a server device, or the like connected to the computer 100 via a public line, the Internet, a LAN, a WAN, or the like, and the computer 100 may acquire and execute the authentication program 170a from the another computer, the server device, or the like.

CITATION LIST

PATENT DOCUMENT

Patent Document 1: Japanese Laid-open Patent Publication No. 2017-91186

REFERENCE SIGNS LIST

1 Authentication apparatus
1A Authentication system
10 Sensor unit
11 Illumination unit
12 Lens
13 Image capturing element
14, 14A, 22, 33 Storage unit
141, 341 Template
141a Lens distortion correction information
141b, 341b Lens distortion correction error information
143 Lens ID information
23, 34 Database unit
25 Extraction unit
26 Normalization processing unit
27 Feature extraction unit
28 Calculation unit
29 Collation unit
30 Server unit
341a Feature data
35 Calculation unit
36 Normalization processing unit
37 Collation unit

**Claims**

1. An authentication method executed by a computer, the method comprising:

   extracting, when a captured image of a living body is acquired, a biometric image included in a region that corresponds to the living body from the captured image; and
   performing authentication of the living body on the basis of the extracted biometric image and a position of the biometric image in the captured image.

2. The authentication method according to claim 1, wherein the processing of performing authentication includes processing of performing authentication of the living body on the basis of lens distortion correction error information related to a lens distortion correction error that remains after execution of distortion correction of a lens used to capture an image of the living body.

3. The authentication method according to claim 2, wherein

   the lens distortion correction error information further includes optical center coordinates of the lens and a normalization parameter when alignment of translation, rotation, or scaling of the biometric image is performed, and
   the processing of performing authentication includes processing of calculating the lens distortion correction error that corresponds to a position of the captured image for each pixel of the biometric image on the basis of the optical center coordinates of the lens and the normalization parameter.

4. The authentication method according to claim 2, wherein the processing of performing authentication includes processing of giving, when a feature point extracted from the biometric image after the execution of the distortion correction of the lens and a feature point included in predetermined registration data are collated, a weight determined from the lens distortion correction errors that correspond to positions of the feature points to a score for collation of feature amounts between the feature points.

5. The authentication method according to claim 2, wherein the lens distortion correction error is represented by an approximation expression based on a distance from an optical center of the lens.

6. The authentication method according to claim 2, wherein the processing of performing authentication includes processing of acquiring the lens distortion correction error from a sensor unit that captures the captured image.

7. The authentication method according to claim 2, wherein the processing of performing authentication includes processing of acquiring the lens distortion correction error that corresponds to identification information of a lens used to capture the captured image, from among a plurality of the lens distortion correction errors associated with each piece of identification information of a lens.

8. An authentication program comprising instructions which, when executed by a computer, cause the computer to perform authentication processing, the authentication processing comprising:

   extracting, when a captured image of a living body is acquired, a biometric image included in a region that corresponds to the living body from the captured image; and
   performing authentication of the living body on the basis of the extracted biometric image and a position of the biometric image in the captured image.

9. The authentication program according to claim 8, wherein the processing of performing authentication includes processing of performing authentication of the living body on the basis of lens distortion correction error information related to a lens distortion correction error that remains after execution of distortion correction of a lens used to capture an image of the living body.

10. The authentication program according to claim 9, wherein

    the lens distortion correction error information further includes optical center coordinates of the lens and a normalization parameter when alignment of translation, rotation, or scaling of the biometric image is performed, and
    the processing of performing authentication includes processing of calculating the lens distortion correction error that corresponds to a position of the captured image for each pixel of the biometric image on the basis of the optical center coordinates of the lens and the normalization parameter.

11. The authentication program according to claim 9, wherein the processing of performing authentication includes processing of giving, when a feature point extracted from the biometric image after the execution of the distortion correction of the lens and a feature point included in predetermined registration data are collated, a weight determined from the lens distortion correction errors that correspond to positions of the feature points to a score for collation of feature amounts between the feature points.

12. The authentication program according to claim 9, wherein the lens distortion correction error is represented by an approximation expression based on a distance from an optical center of the lens.

13. The authentication program according to claim 9, wherein the processing of performing authentication includes processing of acquiring the lens distortion correction error from a sensor unit that captures the captured image.

14. The authentication program according to claim 9, wherein the processing of performing authentication includes processing of acquiring the lens distortion correction error that corresponds to identification information of a lens used to capture the captured image, from among a plurality of the lens distortion correction errors associated with each piece of identification information of a lens.

15. An authentication apparatus comprising:

    an extraction unit of extracting, when a captured image of a living body is acquired, a biometric image included in a region that corresponds to the living body from the captured image; and
    an authentication unit of performing authentication of the living body on the basis of the extracted biometric image and a position of the biometric image in the captured image.

16. The authentication apparatus according to claim 15, wherein the authentication unit performs authentication of the living body on the basis of lens distortion correction error information related to a lens distortion correction error that remains after execution of distortion correction of a lens used to capture an image of the living body.

17. The authentication apparatus according to claim 16, wherein

    the lens distortion correction error information further includes optical center coordinates of the lens and a normalization parameter when alignment of translation, rotation, or scaling of the biometric image is performed, and

the authentication unit calculates the lens distortion correction error that corresponds to a position of the captured image for each pixel of the biometric image on the basis of the optical center coordinates of the lens and the normalization parameter.

18. The authentication apparatus according to claim 16, wherein the authentication unit gives, when a feature point extracted from the biometric image after the execution of the distortion correction of the lens and a feature point included in predetermined registration data are collated, a weight determined from the lens distortion correction errors that correspond to positions of the feature points to a score for collation of feature amounts between the feature points.

19. The authentication apparatus according to claim 16, wherein the lens distortion correction error is represented by an approximation expression based on a distance from an optical center of the lens.

20. The authentication apparatus according to claim 16, wherein the authentication unit acquires the lens distortion correction error from a sensor unit that captures the captured image.

# FIG. 1

1

**20**

**CONTROL UNIT**

| | |
|---|---|
| 24 — OVERALL MANAGEMENT UNIT | NORMALIZATION PROCESSING UNIT — 26 |
| 23 — DATABASE UNIT | FEATURE EXTRACTION UNIT — 27 |
| 22 — STORAGE UNIT | CALCULATION UNIT — 28 |
| 25 — EXTRACTION UNIT | AUTHENTICATION UNIT — 29 |

COMMUNICATION I/F UNIT — 21

**10**

**SENSOR UNIT**

COMMUNICATION I/F UNIT — 15

| | |
|---|---|
| 11 — ILLUMINATION UNIT | SENSOR MANAGEMENT UNIT — 16 |
| 13 — IMAGE CAPTURING ELEMENT | STORAGE UNIT — 14 |
| 12 — LENS | |

TEMPLATE — 141

LENS DISTORTION CORRECTION INFORMATION — 141a

LENS DISTORTION CORRECTION ERROR INFORMATION — 141b

# FIG. 2A

P1

O1

# FIG. 2B

P2

O1

FIG. 3A

P3

O1

FIG. 3B

P4

O1

# FIG. 4

# FIG. 5

DISTORTION CORRECTION ERROR IS SMALL

P10

R2
R1

O1

DISTORTION CORRECTION ERROR IS LARGE

NORMALIZATION PROCESSING

NORMALIZATION PROCESSING

P20

P21

FEATURE EXTRACTION PROCESSING

FEATURE EXTRACTION PROCESSING

EP 4 156 087 A1

# FIG. 6

# FIG. 7

LENS DISTORTION
CORRECTION
ERROR Δ

L1

DISTANCE r FROM OPTICAL CENTER

# FIG. 8

| TEMPLATE | T1 |
|---|---|
| FEATURE DATA | T11 |
| LENS DISTORTION CORRECTION INFORMATION | T12 |
| LENS DISTORTION CORRECTION ERROR INFORMATION<br>· OPTICAL CENTER COORDINATES<br>·NORMALIZATION PARAMETER<br>·LENS DISTORTION CORRECTION ERROR PARAMETER | T13 |

# FIG. 9

```
          ┌─────────────┐
          │    START    │
          └─────────────┘
                 │
                 ▼          ⌇S101
   ┌──────────────────────────────┐
   │    ACQUIRE CAPTURED IMAGE     │
   └──────────────────────────────┘
                 │
                 ▼          ⌇S102
   ┌┃──────────────────────────┃─┐
   │┃   EXTRACTION PROCESSING   ┃ │
   └┃──────────────────────────┃─┘
                 │
                 ▼          ⌇S103
   ┌──────────────────────────────┐
   │   AUTHENTICATION PROCESSING   │
   └──────────────────────────────┘
                 │
                 ▼          ⌇S104
             ◇─────────◇
       AUTHENTICATION SCORE          NO
         ≥ THRESHOLD?      ──────────────┐
             ◇─────────◇                 │
                 │ YES                    │
                 ▼       ⌇S105            ▼      ⌇S106
   ┌──────────────────────┐   ┌──────────────────────────┐
   │ DETERMINE THAT PERSON│   │ DETERMINE THAT PERSON IS │
   │  IS PERSON HIMSELF   │   │ NOT PERSON HIMSELF OR    │
   │     OR HERSELF       │   │        HERSELF           │
   └──────────────────────┘   └──────────────────────────┘
                 │                        │
                 ▼◄───────────────────────┘
          ┌─────────────┐
          │     END     │
          └─────────────┘
```

# FIG. 10

```
        ┌─────────────────────┐
        │     EXTRACTION      │
        │     PROCESSING      │
        └─────────────────────┘
                   │
                   ▼           ⌇S201
   ┌───────────────────────────────────┐
   │      EXTRACT BIOMETRIC IMAGE       │
   └───────────────────────────────────┘
                   │
                   ▼           ⌇S202
   ┌───────────────────────────────────┐
   │     LENS DISTORTION CORRECTION     │
   │            PROCESSING              │
   └───────────────────────────────────┘
                   │
                   ▼           ⌇S203
   ┌───────────────────────────────────┐
   │      NORMALIZATION PROCESSING      │
   └───────────────────────────────────┘
                   │
                   ▼           ⌇S204
   ┌───────────────────────────────────┐
   │    FEATURE EXTRACTION PROCESSING   │
   └───────────────────────────────────┘
                   │
                   ▼           ⌇S205
   ┌───────────────────────────────────┐
   │   CALCULATE FEATURE DATA AND LENS  │
   │   DISTORTION CORRECTION ERROR      │
   │   PARAMETER AND STORE THEM AS      │
   │            TEMPLATE                │
   └───────────────────────────────────┘
                   │
                   ▼
        ┌─────────────────────┐
        │       RETURN        │
        └─────────────────────┘
```

# FIG. 11

R21

ASSOCIATED i-TH
COMBINATION

R22

(a) REGISTRATION
DATA

(b) AUTHENTICATION
DATA

# FIG. 12

1A

**30 SERVER UNIT**

| | | |
|---|---|---|
| 32 OVERALL MANAGEMENT UNIT | 35 CALCULATION UNIT | |
| 33 STORAGE UNIT | 36 NORMALIZATION PROCESSING UNIT | |
| 34 DATABASE UNIT | 37 AUTHENTICATION UNIT | |

341 TEMPLATE

341a FEATURE DATA

341b LENS DISTORTION CORRECTION ERROR INFORMATION

31 COMMUNICATION I/F UNIT

NW

**20A CLIENT UNIT**

29 COMMUNICATION I/F UNIT

| | |
|---|---|
| 24A CLIENT MANAGEMENT UNIT | 27 FEATURE EXTRACTION UNIT |
| 22A STORAGE UNIT | 26 NORMALIZATION PROCESSING UNIT |
| 221 LENS DISTORTION CORRECTION INFORMATION | 25 EXTRACTION UNIT |

21 COMMUNICATION I/F UNIT

**10A SENSOR UNIT**

15 COMMUNICATION I/F UNIT

| | |
|---|---|
| 11 ILLUMINATION UNIT | 16 SENSOR MANAGEMENT UNIT |
| 13 IMAGE CAPTURING ELEMENT | 14A STORAGE UNIT |
| 12 LENS | 143 LENS ID INFORMATION |

# FIG. 13

| TEMPLATE | 341 |
| FEATURE DATA | 341a |
| LENS DISTORTION CORRECTION ERROR INFORMATION<br>· NORMALIZATION PARAMETER<br>·LENS ID<br>·LENS DISTORTION CORRECTION ERROR PARAMETER | 341b |

# FIG. 14

T10

| LENS ID | LENS DISTORTION CORRECTION ERROR PARAMETER |
|---|---|
| 1 | $q_0=..., q_1=..., q_2=...$ |
| 2 | $q_0=..., q_1=..., q_2=...$ |
| 3 | $q_0=..., q_1=..., q_2=...$ |
| 4 | $q_0=..., q_1=..., q_2=...$ |

FIG. 15

EP 4 156 087 A1

## INTERNATIONAL SEARCH REPORT

| | International application No. |
|---|---|
| | PCT/JP2020/020182 |

### A. CLASSIFICATION OF SUBJECT MATTER
Int. Cl. G06T7/00(2017.01)i
FI: G06T7/00 510A

According to International Patent Classification (IPC) or to both national classification and IPC

### B. FIELDS SEARCHED

Minimum documentation searched (classification system followed by classification symbols)
Int. Cl. G06T7/00

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2019-168967 A (CANON INC.) 03 October 2019, paragraphs [0011]-[0064], fig. 1-11, paragraphs | 1-2, 5-9, 12-16, 19-20 |
| A | [0011]-[0064], fig. 1-11 | 3-4, 10-11, 17-18 |
| Y | JP 2019-49978 A (RICOH CO., LTD.) 28 March 2019, paragraphs [0002], [0053], [0142]-[0176] | 1-2, 5-9, 12-16, 19-20 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31.07.2020 | 18.08.2020 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

| | International application No. |
|---|---|
| | PCT/JP2020/020182 |

| Patent Documents referred to in the Report | Publication Date | Patent Family | Publication Date |
|---|---|---|---|
| JP 2019-168967 A | 03.10.2019 | US 2019/0325552 A1 paragraphs [0022]-[0091], fig. 1-11 | |
| JP 2019-49978 A | 28.03.2019 | US 2019/0080197 A1 paragraphs [0003], [0108], [0109], [0226]-[0265] | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2017091186 A